# EUROPÄISCHE PATENTSCHRIFT

(11) **EP 2 936 021 B1**
(45) Veröffentlichungstag und Bekanntmachung des Hinweises auf die Patenterteilung: **29.11.2017**
(21) Anmeldenummer: 13805404.4
(22) Anmeldetag: 16.12.2013
(51) Int. Cl.: F25D 23/06

(54) **VAKUUMISOLATIONSELEMENT FÜR EIN HAUSHALTSKÄLTEGERÄT MIT EINER ERHEBUNG IN DER HÜLLE, HAUSHALTSKÄLTEGERÄT MIT EINEM VAKUUMISOLATIONSELEMENT SOWIE VERFAHREN ZUM HERSTELLEN EINES VAKUUMISOLATIONSELEMENTS**
VACUUM INSULATION ELEMENT FOR A HOUSEHOLD REFRIGERATION APPLIANCE WITH AN ELEVATION IN THE ENVELOPING, HOUSEHOLD REFRIGERATION APPLIANCE COMPRISING A VACUUM INSULATION ELEMENT AND METHOD FOR PRODUCING A VACUUM INSULATION ELEMENT
ÉLÉMENT ISOLANT SOUS VIDE POUR UN APPAREIL DE FROID MÉNAGER, POURVU D'UNE SAILLIE DANS SON ENVELOPPE, APPAREIL DE FROID MÉNAGER POURVU D'UN ÉLÉMENT ISOLANT SOUS VIDE, ET PROCÉDÉ DE FABRICATION D'UN ÉLÉMENT ISOLANT SOUS VIDE

(30) Priorität: 18.12.2012 DE 102012223542
(43) Veröffentlichungstag der Anmeldung: 28.10.2015
(73) Patentinhaber: BSH Hausgeräte GmbH, 81739 München (DE)
(72) Erfinder: EHNINGER, Christian, 89537 Giengen an der Brenz (DE); GÖRZ, Alexander, 73432 Aalen (DE); SEELMEIER, Michael, 73572 Heuchlingen (DE)
(86) Internationale Anmeldenummer: PCT/EP2013/076708
(87) Internationale Veröffentlichungsnummer: WO 2014/095725

(56) Entgegenhaltungen:
- EP-A1- 1 510 747
- WO-A2-2012/156246
- JP-A- S 646 679
- JP-A- H0 882 475
- JP-A- H07 113 492

## Beschreibung

Die Erfindung betrifft ein Vakuumisolationselement für ein Haushaltskältegerät mit einer Hülle, welche einen evakuierten Hohlraum umschließt, welcher zumindest teilweise mit einem Stützkörper gefüllt ist. Des Weiteren betrifft die Erfindung ein Haushaltskältegerät mit zumindest einem derartigen Vakuumisolationselement.

Die Erfindung betrifft auch ein Verfahren zum Herstellen eines Vakuumisolationselements für ein Haushaltskältegerät.

Haushaltskältegeräte, wie beispielsweise ein Kühlgerät oder ein Gefriergerät oder ein Kühl-Gefrier-Kombigerät, umfassen thermisch isolierende Wandungen, die einen Innenraum, in dem Lebensmittel zur Lagerung und Konservierung eingebracht sind, begrenzen. Dazu ist bei den bekannten Geräten bekanntermaßen vorgesehen, dass Wände eines Innenbehälters diesen Innenraum seitlich, von unten und von oben begrenzen. Das Gehäuse des Haushaltskältegeräts umfasst darüber hinaus üblicherweise einen Außenbehälter, der den Innenbehälter umgibt. Es kann vorgesehen sein, dass ein Zwischenraum zwischen dem Innenbehälter und dem Außenbehälter mit einem thermisch isolierenden Schaummaterial gefüllt ist.

Gleiches kann auch bei einer Tür vorgesehen sein, die zum Verschließen des Innenraums frontseitig oder von oben angeordnet ist.

Darüber hinaus ist es auch bekannt, dass eine derartige Tür oder eine Wandung eines solchen Haushaltskältegeräts ein Vakuumisolationselement aufweist. Dieses umfasst üblicherweise eine Hülle, die durch eine Innenschale und eine Außenschale gebildet ist. In einem Zwischenraum bzw. einem Hohlraum zwischen den beiden Schalen ist ein Füllmaterial als Stützkörper eingebracht.

Evakuierte thermische Isolationskörper sind beispielsweise aus der DE 10 2009 002 800 A1 bekannt. Vakuumisolationselemente weisen Vorteile bei der thermischen Isolierung gegenüber Schaummaterialien auf. Sie ermöglichen eine höhere thermische Isolation bei geringeren Bautiefen.
Aus der DE 10 2009 002 800 A1 sind auch Ausführungen bekannt, bei denen eine Hülle bzw. eine Schale eines evakuierten Isolationskörpers eine Unebenheit aufweist, die einen dahinterliegenden Hohlraum bildet, der von dem Stützkörper nicht gefüllt ist. Dadurch ist die mechanische Stabilität dieser Hülle in dem Bereich eingeschränkt und es sind darüber hinaus auch nur sehr einfache Geometrien dieser Erhebung erzeugbar.
Ein weiteres Vakuumisolationselement ist aus der DE 101 17 021 A1 bekannt. Dort ist in dem Hohlraum der Hülle neben dem Stützkörper auch ein Funktionsbauteil integriert angeordnet, welches eine Druckmesseinrichtung ist. Es kann dort auch vorgesehen sein, dass die Druckmesseinrichtung mit einem externen, von dem Vakuumisolationselement beabstandeten Gerät elektrisch wechselwirkt und entsprechende Signale ausgetauscht werden können. Bei einer magnetischen Wechselwirkung zwischen dem als Einlegeteil ausgebildeten Funktionsteil im Hohlraum und einem außerhalb des Vakuumisolationselements beabstandet zur Hülle angeordneten Gegenelement ist dieses Gegenelement relativ zum Einlegeteil bewegbar, um die Funktion der Wechselwirkung ermöglichen zu können.

Ferner beschreibt die JP H07 113492 A ein Vakuumisolationselement, gemäß den Oberbegriff des Anspruchs 1, welches einen plattenförmigen Körper und eine luftdichte Hülle aufweist. Die Hülle kann so ausgebildet sein, dass diese Rippe ausbildet. Diese Rippe kann mit einem zusätzlichen Körper, der innerhalb der Hülle angeordnet ist, ausgefüllt sein.
Ferner beschreibt die WO 2012/156246 A2 ein Vakuumisolationspaneel für ein Kältegerät, insbesondere ein Haushaltskältegerät. Das Vakuumisolationspaneel weist wenigstens einen wärmeisolierenden Stützkörper und eine den Stützkörper umschließende luftdichte Außenhaut auf. Dabei ist es vorgesehen, dass der Stützkörper mindestens zwei Abschnitte unterschiedlicher Dichte aufweist.

Es ist Aufgabe der vorliegenden Erfindung, ein Vakuumisolationselement für ein Haushaltskältegerät mit einer mechanisch stabilen Erhebung in der Hülle zu schaffen. Ebenso soll ein entsprechendes Haushaltskältegerät sowie ein Verfahren zum Herstellen eines Vakuumisolationselements geschaffen werden.

Diese Aufgabe wird durch ein Vakuumisolationselement und ein Haushaltskältegerät gemäß den unabhängigen Ansprüchen gelöst. Ebenso wird diese Aufgabe durch ein Verfahren zum Herstellen eines Vakuumisolationselements gelöst.

Ein erfindungsgemäßes Vakuumisolationselement für ein Haushaltskältegerät umfasst eine Hülle, welche einen evakuierten Hohlraum umschließt. Der Hohlraum ist zumindest teilweise mit einem Stützkörper gefüllt. Die Hülle weist eine Erhebung auf, die eine Nische umschließt, wobei in der Nische ein von dem Stützkörper unterschiedliches Einlegeteil angeordnet ist. Durch eine derartige Ausgestaltung wird es ermöglicht, dass auch sehr komplexe Geometrien der Erhebung geschaffen werden können und insbesondere die mechanische Stabilität einer derartigen Erhebung wesentlich erhöht wird. Indem das Einlegeteil quasi ein zum Stützkörper separates Bauteil ist, wird einerseits die Herstellung vereinfacht und andererseits die Flexibilität und Variabilität bei der Gestaltung der Erhebung erhöht. Insbesondere ist dadurch auch die Abfolge der Einbringung des Stützkörpermaterials einerseits und des Einlegeteils andererseits flexibilisiert und ermöglicht auch in dem Zusammenhang somit die bisher herstellungstechnisch gegebenen Beschränkungen aufzuheben. Darüber hinaus kann ein derartiges Einlegeteil bereits in einem gewissen Rahmen vorgefertigt ausgebildet sein und muss nicht im Zuge der Einbringung des Materials des Stützkörpers eingebracht werden. Insbesondere die Verfüllung der Nische, gerade auch bei sehr komplexen Geometrien, ist durch die Erfindung wesentlich verbessert.

Zudem ist vorgesehen, dass das Einlegeteil selbstexpandierend ausgebildet ist. Diese Ausgestaltung ist von besonderer Vorteilhaftigkeit bei sehr komplexen Geometrien der Erhebung, die dann gegebenenfalls auch Hinterschneidungen aufweisen kann. Gerade dann ist es mit einem separaten Einlegeteil, welches darüber hinaus auch noch selbstexpandierend ist, ermöglicht, den Raum der Nische zumindest nahezu vollständig, vorzugsweise komplett vollständig, auszufüllen.

Vorzugsweise ist vorgesehen, dass das Einlegeteil die Nische zumindest bereichsweise ausfüllt.

Das Einlegeteil kann gepresste Kieselsäure umfassen oder sein.

Vorzugsweise ist vorgesehen, dass sich das Einlegeteil bereichsweise in den Stützkörper erstreckt. Dadurch wird die mechanische Kopplung verbessert und eine gewisse Verzahnung erreicht. Unerwünschte Positionsverschiebungen bei der Herstellung und auch später bei mechanischer Belastung der Erhebung können dadurch vermieden werden. Die mechanische Stabilität der Erhebung ist dadurch nochmals erhöht.

Vorzugsweise ist vorgesehen, dass sich die Nische zum Stützkörper hin verjüngt. Gerade bei derartigen Geometrien der Erhebung ist die Verwendung von Einlegeteilen besonders vorteilhaft. Dadurch sich bildende Hinterschnitte der Erhebung sind nunmehr mit dem Einlegeteil, welches insbesondere selbstexpandierend ausgebildet ist, umfänglich füllbar.

Vorzugsweise ist vorgesehen, dass das Einlegeteil selbst hohlraumfrei ausgebildet ist. Ein derartiges massives Bauteil erhöht die mechanische Stabilität wesentlich.

Es kann auch vorgesehen sein, dass das Einlegeteil zumindest einen Hohlraum aufweist.

Des Weiteren betrifft die Erfindung eine Wandung für ein Haushaltskältegerät mit zumindest einem Vakuumisolationskörper gemäß der Erfindung oder einer vorteilhaften Ausführung davon. Die Wandung kann vorzugsweise eine Tür zum Verschließen eines Innenraums sein.

Besonders vorteilhaft ist somit die Kombination mit einem Vakuumisolationskörper, wenn die Wandung ansonsten ohne weiteres thermisch isolierendes Schaummaterial ausgebildet ist. Vorzugsweise ist somit die Wandung dann ohne thermisch isolierendes Schaummaterial ausgebildet, und stellt somit eine Vollvakuumwandung dar.

Der Vakuumisolationskörper ist insbesondere durch eine Innenhaut bzw. Innenschale und einer Außenhaut bzw. einer Außenschale gebildet, wobei in einem Zwischenraum zwischen der Innenschale und der Außenschale ein Füllmaterial bzw. ein Stützkörper enthalten ist. Dieses Füllmaterial kann beispielweise Kieselsäure umfassen bzw. ist Kieselsäure. Es können jedoch auch andere bekannte Isolationsmaterialien als Füllmaterial vorgesehen sein. So können auch hochporöse Festkörper eingesetzt sein.

Besonders vorteilhaft ist es, wenn die Wandung eine Tür, insbesondere Vollvakuumtür, für das Haushaltskältegerät ist. Gerade bei einer Tür kann in Verbindung mit einem Trägerrahmen und einem dann vorzugsweise als Vakuumisolationskörper ausgebildeten thermischen Isolationskörper ein im Hinblick auf die thermische Isolationswirkung hochfunktionelles Bauteil geschaffen werden, welches mit deutlich reduziertem Montageaufwand hergestellt werden kann und dennoch eine zuverlässige und dauerhaft stabile Positionsanbringung und Halterung des Vakuumisolationskörpers ermöglicht. Gerade dann, wenn die Tür ohne weiteres thermisch isolierendes Schaummaterial ausgebildet ist, reicht die Positionshalterung mit dem Trägerrahmen bereits aus, wodurch sich auch eine Gewichtsreduzierung und kompaktere Bauform der Tür realisieren lässt.

Des Weiteren betrifft die Erfindung ein Haushaltskältegerät mit zumindest einem Vakuumisolationselement gemäß der Erfindung oder einer vorteilhaften Ausgestaltung davon. Das Haushaltskältegerät kann beispielsweise ein Kühlgerät oder ein Gefriergerät oder ein Kühl-Gefrier-Kombigerät sein. Es ist zur Aufnahme von Lebensmittel ausgebildet, die in einem Innenraum des Haushaltskältegeräts gelagert und konserviert werden können. Als Lebensmittel werden Speisen und Getränke angesehen.

Das Vakuumisolationselement ist beispielsweise an einer Tür, welche zum Verschließen des Innenraums vorgesehen ist, und/oder in einem Zwischenraum zwischen einem Innenbehälter und einem Außenbehälter, die ein Gehäuse des Haushaltskältegeräts bilden, angeordnet.

Des Weiteren betrifft die Erfindung ein Verfahren zum Herstellen eines Vakuumisolationselements für ein Haushaltskältegerät, bei welchem eine Hülle des Vakuumisolationselements mit einer Erhebung ausgebildet wird und dann ein Einlegeteil in die Nische eingebracht wird. Nach dem Einbringen des Einlegeteils in die Nische wird der Hohlraum des Vakuumisolationselements mit einem Stützkörper zumindest bereichsweise gefüllt. Die dadurch erreichbaren Vorteile wurden bereits oben genannt.

Ferner wird vorgesehen, dass sich das Einlegeteil nach dem Einbringen in die Nische selbst expandiert.

Vorteilhafte Ausführungen des Vakuumisolationselements sind als vorteilhafte Ausführungen des Verfahrens anzusehen.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen

Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind.

Ausführungsbeispiele der Erfindung werden nachfolgend anhand schematischer Zeichnungen näher erläutert. Es zeigen:
- Fig. 1: eine perspektivische Darstellung eines Ausführungsbeispiels eines erfindungsgemäßen Haushaltskältegeräts;
- Fig. 2: eine perspektivische Ansicht von hinten einer als Tür ausgebildeten Wandung des Haushaltskältegeräts gemäß Fig. 1;
- Fig. 3: eine Explosionsdarstellung des Ausführungsbeispiels der Tür gemäß Fig. 2;
- Fig. 4: eine perspektivische Schnittdarstellung durch ein erstes Ausführungsbeispiel eines erfindungsgemäßen Vakuumisolationselements; und
- Fig. 5: eine Schnittdarstellung durch ein weiteres Ausführungsbeispiel eines erfindungsgemäßen Vakuumisolationselements.

In den Figuren werden gleiche oder funktionsgleiche Elemente mit den gleichen Bezugszeichen versehen.

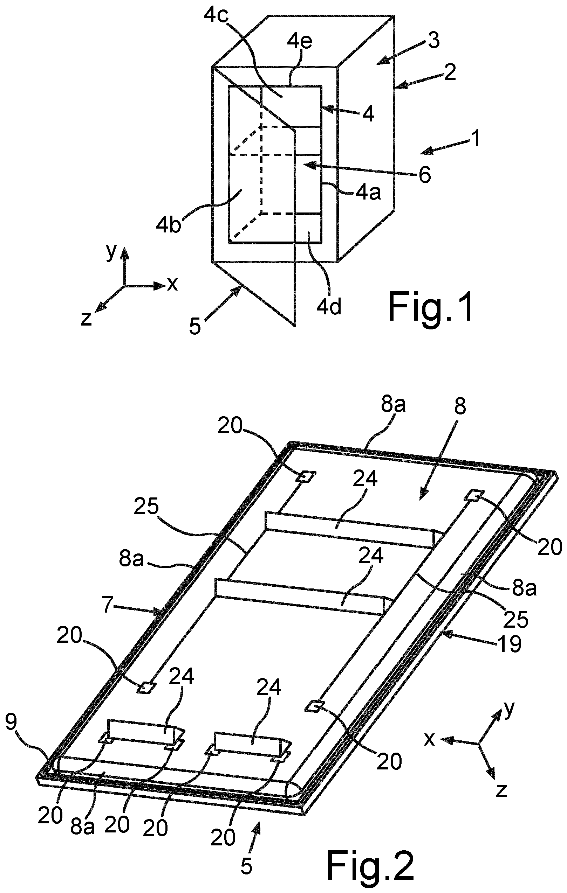

In Fig. 1 ist in einer perspektivischen Darstellung ein Haushaltskältegerät 1 gezeigt, welches zur Aufnahme von Lebensmitteln, wie beispielsweise Getränken und Speisen, ausgebildet ist. Das Haushaltskältegerät 1 kann beispielsweise ein Kühlgerät oder ein Gefriergerät oder ein Kühl-Gefrier-Kombigerät sein.

Das Haushaltskältegerät 1 umfasst ein Gehäuse 2, welches ein Außengehäuse bzw. einem Außenbehälter 3 und ein darin angeordnetes Innengehäuse umfasst, welches ein Innenbehälter 4 ist. Der Außenbehälter 3 umgibt den Innenbehälter 4, wobei beide frontseitig eine Beschickungsöffnung aufweisen, die durch eine Tür 5 verschließbar ist. Der Innenbehälter 4 begrenzt mit seitlichen Wänden bzw. seitlichen Wandungen 4a und 4b sowie einer Rückwand bzw. einer hinteren Wandung 4c, sowie einer Bodenwandung 4d und einer Deckenwandung 4e einen Innenraum 6. Abhängig davon, wie das Haushaltskältegerät 1 ausgebildet ist, kann dieser Innenraum vollständig ein Kühlfach sein oder ein No-Frost-Fach umfassen, oder ein Gefrierfach sein. Es kann auch vorgesehen sein, dass das Haushaltskältegerät 1 als Innenraum 6 ein Kühlfach aufweist, in dem innenliegend ein Gefrierfach integriert ist, welches insbesondere dann durch eine weitere eigene Gefrierfach-Tür verschließbar ist.

Im Ausführungsbeispiel ist vorgesehen, dass die Tür 5 zum Verschließen des Innenraums 6 eine Vakuumisolationstür, insbesondere eine Vollvakuumtür, ist. Dazu ist vorgesehen, dass die Tür 5 zumindest ein Vakuumisolationselement, welches einen thermischen Isolationskörper darstellt, aufweist. Die Tür 5 stellt darüber hinaus ebenfalls eine Wandung des Haushaltskältegeräts 1 dar.

In Fig. 2 ist in einer perspektivischen Ansicht auch eine Innenseite 7 der Tür 5 mit dem Vakuumisolationselement 8 dargestellt. Die Tür 5 umfasst neben dem plattenartigen rechteckigen Vakuumisolationselement 8 einen Trägerrahmen 9. Der Trägerrahmen 9 umgreift umfangsseitig das Vakuumisolationselement 8 vollständig. Das Vakuumisolationselement 8 ist somit von dem Trägerrahmen 9 gehalten, insbesondere an einem Umfangsrand 8a davon umgriffen.

Der Trägerrahmen 9 ist ebenfalls rechteckig gestaltet und mehrteilig aus Trägerrahmenteilen 14 bis 17 ausgebildet, die zerstörungsfrei lösbar und verbindbar sind. Der Trägerrahmen 9 kann alternativ auch einstückig ausgebildet sein.

Der Trägerrahmen 9 ist darüber hinaus aus Kunststoff ausgebildet und insbesondere als Spritzgussteil realisiert. Es kann vorgesehen sein, dass der Trägerrahmen 9 aus einem einzigen Kunststoffmaterial oder aus zumindest zwei unterschiedlichen Kunststoffmaterialien ausgebildet ist.

Es sind in Anzahl und Position lediglich beispielhaft Erhebungen 20 in Fig. 2 gezeigt. Sie können paarweise auf gleicher Höhe angeordnet sein und zur Aufnahme von beispielsweise Türabstellern 24 oder Trägern 25 für Türabsteller 24 ausgebildet sein.

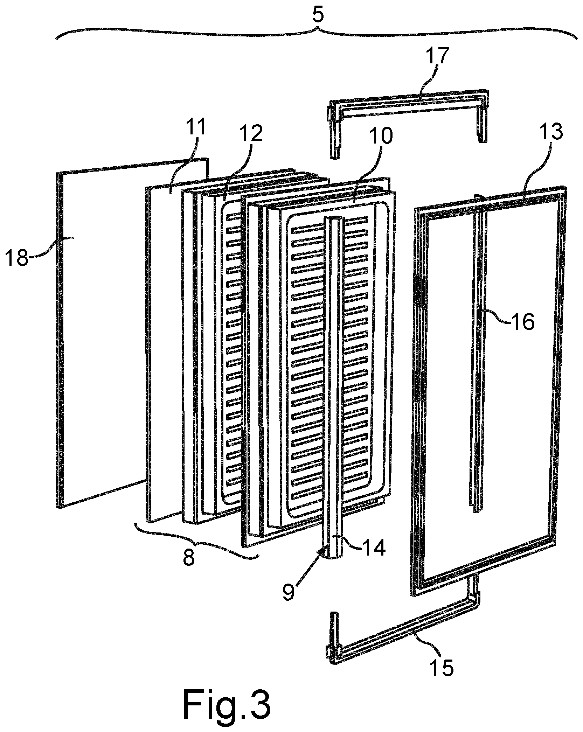

In Fig. 3 ist in einer Explosionsdarstellung die Tür 5 gezeigt.

Es ist dabei zu erkennen, dass das Vakuumisolationselement 8 eine hintere bzw. Innenschale 10 aufweist, die einstückig aus Kunststoff ausgebildet ist. Darüber hinaus umfasst das Vakuumisolationselement 8 eine vordere Schale bzw. eine Außenschale 11, welche ebenfalls einstückig aus Kunststoff ausgebildet ist. Im zusammengesetzten Zustand des Vakuumisolationselements 8 sind die beiden Schalen 10 und 11 miteinander verbunden. Beispielsweise kann hier ein Verkleben oder Verschweißen vorgesehen sein. In dem zwischen den Schalen 10 und 11 gebildeten Zwischenraum bzw. Hohlraum ist ein Füllkörper bzw. Stützkörper 12 eingebracht. Beispielsweise kann hier ein poröser Festkörper vorgesehen sein. In bevorzugter Weise ist Kieselsäure als Füllmaterial vorgesehen. Dieser Zwischenraum zwischen den Schalen 10 und 11 ist evakuiert.

Darüber hinaus ist in Fig. 3 eine umlaufende Dichtung 13 gezeigt, die im zusammengesetzten Zustand an dem Trägerrahmen 9 angeordnet ist. Der Trägerrahmen 9 ist somit multifunktionell gestaltet und zur Aufnahme mehrerer unterschiedlicher separater gegenständlicher Komponenten vorgesehen. Neben der Dichtung 13 kann darüber hinaus jedoch auch noch ein anderes Funktionsbauteil zusätzlich an dem Trägerrahmen 9 angeordnet sein. Beispielsweise können hier ein Scharnier und/oder eine Lagereinheit und/oder ein Versteifungsteil vorgesehen sein.

Im Ausführungsbeispiel umfasst der Trägerrahmen 9 durch seine rechteckige Formgebung vier Trägerrahmenteile 14, 15, 16 und 17. Die beiden Trägerrahmenteile 14 und 16, welche geradlinige längliche Bauteile sind, erstrecken sich vertikal und parallel. Ebenso erstrecken sich die horizontal angeordneten Trägerrahmenteile 15 und 17 parallel zueinander.

Eine alternativ ebenso mögliche, einstückige Ausgestaltung des Trägerrahmens 9 ist insbesondere durch die während eines einzigen Herstellungsprozesses ausgebildete Form gestaltet. Es werden somit insbesondere keine Ausgestaltungen unter einer Einstückigkeit verstanden, die zunächst das Herstellen separater Trägerrahmenteile umfasst, die dann nachfolgend beispielsweise miteinander verklebt werden oder dergleichen.

Die Tür 5 umfasst darüber hinaus eine außenseitige bzw. frontseitige Abdeckung 18, die beispielweise ein plattenartiges Außenblech ist.

In zumindest einem der Trägerrahmenteile 14 bis 17 kann auch integriert und somit innenliegend ein metallisches Versteifungsteil eingebettet sein. Insbesondere ist diese Integration derart, dass das metallische Versteifungsteil vollständig von dem Kunststoffmaterial des Trägerrahmenteils 14 bis 17 umschlossen ist.

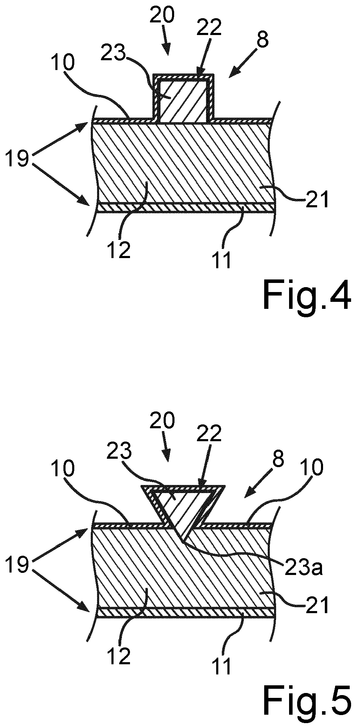

In Fig. 4 ist in einer Schnittdarstellung (y-z-Ebene) ein Ausführungsbeispiel eines erfindungsgemäßen Vakuumisolationselements 8 gezeigt. Bei dieser Ausführung ist vorgesehen, dass die Innenschale 10, die zusammen mit der Außenschale 11 eine Hülle 19 des Vakuumisolationselements 8 bildet, eine Unebenheit bzw. eine Erhebung 20 aufweist. Die Erhebung 20 ist somit von einem Hohlraum 21, der zwischen der Innenschale 10 und der Außenschale 11 gebildet ist, wegorientiert. Durch die Erhebung 20 ist eine Nische 22 gebildet, die ohne Material des Stützkörpers 12 gestaltet ist. In dieser Nische 22 ist ein vom Stützkörper 12 unterschiedliches und separates Einlegeteil 23 angeordnet, welches die Nische 22 zumindest bereichsweise, insbesondere vollständig, ausfüllt.

Im Ausführungsbeispiel gemäß Fig. 4 ist die Erhebung 20 im Querschnitt rechteckig geformt und weist somit keine Hinterschnitte auf. Das Einlegeteil 23 ist hohlraumfrei ausgebildet und liegt an dem Stützkörper 12 an. Ein Ineinandergreifen des Einlegeteils 23 mit dem Stützkörper 12 ist hier nicht ausgebildet, kann jedoch vorgesehen sein.

In Fig. 5 ist ein weiteres Ausführungsbeispiel eines Vakuumisolationselements 8 gezeigt. Im Unterschied zur Ausgestaltung gemäß Fig. 4 ist hier vorgesehen, dass die Erhebung 20 mit Hinterschnitten ausgebildet ist. Dies bedeutet in der gezeigten Ausführung im Querschnitt, dass sich die Nische 22 zum Stützkörper 12 hin verjüngt. Gerade bei derartigen Ausgestaltungen ist die mechanische Stabilität der Erhebung besonders wichtig und mit einem herkömmlichen Ausfüllen mit dem Material des Stützkörpers 12 nicht erreichbar.

In der gezeigten Ausführung ist das Einlegeteil 23 selbstexpandierend ausgebildet. Darüber hinaus erstreckt es sich mit einem Ende 23a aus der Nische 22 heraus und in das Material des Stützkörpers 12 hinein. Es ist bei der Ausführung in Fig. 5 somit ein gewisses Ineinandergreifen und somit ein Verzahnen zwischen dem Stützkörper 12 und dem Einlegeteil 23 ausgebildet. Durch die Selbstexpansion des Materials des Einlegeteils 23 wird die Nische 22 vollständig gefüllt. Auch hier ist das Einlegeteil 23 hohlraumfrei ausgebildet.

Beim Herstellen der Ausgestaltungen gemäß Fig. 4 und Fig. 5 wird zunächst die Hülle 19 mit der Innenschale 10 bereitgestellt. Die Innenschale 10 wird dabei mit der Erhebung 20 geformt. Nachfolgend wird dann das Einlegeteil 23 eingebracht und der Hohlraum 24 dann zumindest bereichsweise mit dem Material des Stützkörpers 12 verfüllt. Gerade bei dem Ausführungsbeispiel, bei dem das Material des Einlegeteils 23 selbstexpandierend ist, kann diese Selbstexpansion vor dem Einbringen des Materials des Stützkörpers 12 erfolgen und zum Abschluss gebracht werden oder zumindest zeitweise gleichzeitig mit dem Einbringen des Materials des Stützkörpers 12 erfolgen. Durch das bereichsweise Ineinandergreifen zwischen dem Einlegeteil 23 und dem Stützkörper 12 ist das Einlegeteil 23 bereichsweise in das Material des Stützkörpers 12 eingebettet.

### Bezugszeichenliste

- 1: Haushaltskältegerät
- 2: Gehäuse
- 3: Außengehäuse
- 4: Innengehäuse
- 4a, 4b: Seitliche Wandungen
- 4c: Hintere Wandung
- 4d: Bodenwandung
- 4e: Deckenwandung
- 5: Tür
- 6: Innenraum
- 7: Innenseite
- 8: Vakuumisolationselement
- 8a: Umfangsrand
- 9: Trägerrahmen
- 10: Innenschale
- 11: Außenschale
- 12: Stützkörper
- 13: Dichtung
- 14, 15, 16, 17: Trägerrahmenteile
- 18: Abdeckung
- 19: Hülle
- 20: Erhebung
- 21: Hohlraum
- 22: Nische
- 23: Einlegeteil
- 23a: Ende
- 24: Türabsteller
- 25: Träger

## Patentansprüche

1. Vakuumisolationselement (8) für ein Haushaltskältegerät (1) mit einer Hülle (19), welche einen evakuierten Hohlraum (21) umschließt, welcher zumindest teilweise mit einem Stützkörper (12) gefüllt ist, wobei die Hülle (19) eine Erhebung (20) aufweist, die eine Nische (22) umschließt, und in der Nische (22) ein zum Stützkörper (12) separates Einlegeteil (23) angeordnet ist, **dadurch gekennzeichnet, dass** das Einlegeteil (23) selbstexpandierend ausgebildet ist.

2. Vakuumisolationselement (8) nach Anspruch 1, **dadurch gekennzeichnet, dass** das Einlegeteil (23) die Nische (22) zumindest bereichsweise, insbesondere zu zumindest 90%, insbesondere vollständig, ausfüllt.

3. Vakuumisolationselement (8) nach einem der vorhergehenden Ansprüche, **dadurch gekennzeichnet, dass** sich das Einlegeteil (23) bereichweise in den Stützkörper (12) hinein erstreckt.

4. Vakuumisolationselement (8) nach einem der vorhergehenden Ansprüche, **dadurch gekennzeichnet, dass** sich die Nische (22) zum Stützkörper (12) hin verjüngt.

5. Vakuumisolationselement (8) nach einem der vorhergehenden Ansprüche, **dadurch gekennzeichnet, dass** das Einlegeteil (23) selbst hohlraumfrei ausgebildet ist.

6. Vakuumisolationselement (8) nach einem der vorhergehenden Ansprüche 1 bis 4, **dadurch gekennzeichnet, dass** das Einlegeteil (23) selbst zumindest einen Hohlraum, insbesondere einen umschlossenen Hohlraum aufweist.

7. Haushaltkältegerät (1) mit zumindest einem Vakuumisolationselement (8) nach einem der vorhergehenden Ansprüche.

8. Verfahren zum Herstellen eines Vakuumisolationselements (8), bei welchem eine Hülle (19) mit einer Erhebung (20) ausgebildet wird, wobei ein Einlegeteil (23) in die Nische (22) eingebracht wird, und dann der Hohlraum (21) des Vakuumisolationselements (8) mit einem Stützkörper (12) zumindest bereichsweise gefüllt wird, **dadurch gekennzeichnet, dass** sich das Einlegeteil (23) nach dem Einbringen in die Nische (22) selbst expandiert.

## Claims

1. Vacuum insulation element (8) for a domestic refrigeration appliance (1) with a covering (19), which encloses an evacuated cavity (21), which is at least partially filled by a supporting body (12), wherein the covering (19) has an elevation (20) which encloses a recess (22), and an insert part (23) separate from the supporting body (12) is arranged in the recess (22), **characterised in that** the insert part (23) is embodied so as to be self-expanding.

2. Vacuum insulation element (8) according to claim 1, **characterised in that** the insert part (23) fills up the recess (22) at least in regions, in particular at least 90% thereof, in particular completely.

3. Vacuum insulation element (8) according to one of the preceding claims, **characterised in that** the insert part (23) extends into the supporting body (12) in regions.

4. Vacuum insulation element (8) according to one of the preceding claims, **characterised in that** the recess (22) tapers towards the supporting body (12).

5. Vacuum insulation element (8) according to one of the preceding claims, **characterised in that** the insert part (23) itself is embodied so as to be free of cavities.

6. Vacuum insulation element (8) according to one of the preceding claims 1 to 4, **characterised in that** the insert part (23) itself has at least one cavity, in particular an enclosed cavity.

7. Domestic refrigeration appliance (1) with at least one vacuum insulation element (8) according to one of the preceding claims.

8. Method for manufacturing a vacuum insulation element (8), in which a covering (19) is embodied with an elevation (20), wherein an insert part (23) is introduced into the recess (22), and then the cavity (21) of the vacuum insulation element (8) is filled with a supporting body (12) at least in regions, **characterised in that** the insert part (23) itself expands after being inserted into the recess (22).

## Revendications

1. Élément d'isolation sous vide (8) pour un appareil ménager (1) avec une enveloppe (19), qui entoure un espace creux (21) dans lequel le vide est fait, lequel est au moins en partie comblé par un corps d'appui (12), dans lequel l'enveloppe (19) présente une éminence (20) qui entoure une niche (22), et une pièce d'insertion (23) distincte du corps d'appui (12) est disposé dans la niche (22), **caractérisé en ce que** la pièce d'insertion (23) est exécutée de façon auto-extensible.

2. Élément d'isolation sous vide (8) selon la revendication 1, **caractérisé en ce que** la pièce d'insertion (23) comble la niche (22) au moins par endroits, en particulier à au moins 90%, en particulier intégralement.

3. Élément d'isolation sous vide (8) selon l'une des revendications précédentes, **caractérisé en ce que** la pièce d'insertion (23) s'étend par endroits à l'intérieur du corps d'appui (12).

4. Élément d'isolation sous vide (8) selon l'une des revendications précédentes, **caractérisé en ce que** la niche (22) se rétrécit en direction du corps d'appui (12).

5. Élément d'isolation sous vide (8) selon l'une des revendications précédentes, **caractérisé en ce que** la pièce d'insertion (23) est elle-même exécuté sans espace creux.

6. Élément d'isolation sous vide (8) selon l'une des revendications précédentes 1 à 4, **caractérisé en ce que** la pièce d'insertion (23) présente elle-même au moins un espace creux, en particulier un espace creux enclavé.

7. Appareil frigorifique ménager (1) avec au moins un élément d'isolation sous vide (8) selon l'une des revendications précédentes.

8. Procédé de fabrication d'un élément d'isolation sous vide (8), dans lequel une enveloppe (19) est exécutée avec une éminence (20), dans lequel une pièce d'insertion (23) est insérée dans la niche (22) et l'espace creux (21) de l'élément d'isolation sous vide (8) est ensuite au moins en partie comblé par un corps d'appui (12), **caractérisé en ce que** la pièce d'insertion (23) est elle-même en expansion après l'insertion dans la niche (22).
